# EUROPÄISCHE PATENTANMELDUNG

(11) **EP 0 728 614 A1**
(43) Veröffentlichungstag der Anmeldung: **28.08.1996**
(21) Anmeldenummer: 96102009.6
(22) Anmeldetag: 12.02.1996
(51) Int. Cl.: B60M 1/14

(54) **Oberleitungsanlage**

(30) Priorität: 24.02.1995 DE 19506527
(71) Anmelder: SIEMENS AKTIENGESELLSCHAFT, 80333 München (DE)
(72) Erfinder: Burkert, Wieland, Dipl.-Ing., D-90584 Allersberg (DE); Wehnert, Peter, Dipl.-Ing., D-91074 Herzogenaurach (DE)

(57) **Zusammenfassung**

Die Erfindung betrifft eine Oberleitungsanlage, deren Kettenwerk im Bereich einer Weiche wenigstens einen Fahrdraht (1) für ein Stammgleis (2) und wenigstens einen Fahrdraht (3) für ein Zweiggleis (4) umfaßt. In Weichenstellung "Geradeaus" ist der Fahrdraht (3) für das Zweiggleis (4) gegenüber dem Fahrdraht (1) für das Stammgleis (2) angehoben und in Weichenstellung "Abzweigen" ist der Fahrdraht (3) für das Zweiggleis (4) auf die Höhe des Fahrdrahtes (1) für das Stammgleis (2) abgesenkt. Dadurch ist auch im Bereich einer Weiche ein Befahren des Stammgleises (2) mit einer Geschwindigkeit von über 200 km/h ohne Unterhaken des Fahrdrahtes (3) für das Zweiggleis (4) unter die Stromabnehmer-Schleifleiste möglich, wobei gleichzeitig die Kontaktkraftspitzen und die Lichtbogenbildung vermieden werden.

## Beschreibung

Die Erfindung betrifft eine Oberleitungsanlage, deren Kettenwerk im Bereich einer Weiche wenigstens einen Fahrdraht für ein Zweiggleis umfaßt.

Falls bei einer derartigen Oberleitungsanlage, bei der sich die Fahrdrähte in einem Punkt kreuzen oder bei der die Fahrdrähte in einem Bereich annähernd parallel verlaufen, das Stammgleis mit einer Geschwindigkeit von über 200 km/h befahren wird, müssen im Weichenbereich, in dem sich die Kettenwerke kreuzen, Maßnahmen vorgesehen werden, durch die ein Unterhaken des Fahrdrahtes unter die Schleifleiste des Stromabnehmers sowie eine Lichtbogenbildung zwischen Fahrdraht und Schleifleiste verhindert werden. Der Stützpunkt für den Fahrdraht des Stammgleises und der Stützpunkt für den Fahrdraht des Zweiggleises, die beide an einem einzigen Mast bzw. an zwei eng benachbarten Masten oder an einer einzigen Quertrageinrichtung bzw. an zwei eng benachbarten Quertrageinrichtungen im Bereich der Weichenmitte angeordnet sind, liegen etwa auf gleicher vertikaler Höhe bzw. die Höhendifferenz zwischen beiden Fahrdrähten am Stützpunkt ist nicht genauer spezifiziert.

Bei gleicher oder bei annähernd gleicher Höhenlage des Fahrdrahtes für das Stammgleis und des Fahrdrahtes für das Zweiggleis kommt es bei der Befahrung des Stammgleises in beiden Richtungen durch das Anheben des Fahrdrahtes für das Stammgleis zu einer Berührung der Schleifleiste mit dem Fahrdraht für das Zweiggleis. Die Folgen sind Lichtbogenbildung und Kontaktkraftspitzen.

Derartige Lichtbögen verursachen einen elektrischen Abbrand von der Schleifleiste und am Fahrdraht und führen damit zu einem erheblich schnelleren örtlichen Verschleiß, der zu einer steten Verschlechterung der Befahrgüte sowohl des Fahrdrahtes für das Stammgleis als auch des Fahrdrahtes für das Zweiggleis in diesem Bereich führt und deshalb möglicherweise einen vorzeitigen Fahrdrahtaustausch erforderlich macht.

Aufgabe der vorliegenden Erfindung ist es, eine Oberleitungsanlage der eingangs genannten Art zu schaffen, die auch im Bereich einer Weiche ein Befahren des Stammgleises mit einer Geschwindigkeit von über 200 km/h ohne Unterhaken eines Fahrdrahtes unter die Stromabnehmer-Schleifleiste zuläßt, wobei gleichzeitig die Kontaktkraftspitzen und die Lichtbogenbildung vermieden werden sollen.

Die Aufgabe wird erfindungsgemäß durch die Merkmale im kennzeichnenden Teil des Anspruchs 1 gelöst. Vorteilhafte Ausgestaltungen der Erfindung sind in den weiteren Ansprüchen beschrieben.

Bei der erfindungsgemäßen Oberleitungsanlage ist in Weichenstellung "Geradeaus" der Fahrdraht für das Zweiggleis gegenüber dem Fahrdraht für das Stammgleis angehoben. In Weichenstellung "Abzweigen" ist der Fahrdraht für das Zweiggleis auf die Höhe des Fahrdrahtes für das Stammgleis abgesenkt.

Der Fahrdraht für das Zweiggleis ist erfindungsgemäß also nur dann auf die Höhe des Fahrdrahtes für das Stammgleis abgesenkt, wenn aufgrund der Weichenstellung "Abzweigen" die Stromabnehmer-Schleifleiste vom Fahrdraht für das Stammgleis auf den Fahrdraht für das Zweiggleis wechselt. Beim Befahren des Stammgleises in beiden Richtungen befindet sich die Weiche in "Geradeaus"-Stellung, so daß der Fahrdraht für das Zweiggleis gegenüber dem Fahrdraht für das Stammgleis angehoben ist. Dadurch sind Berührungen des Fahrdrahtes für das Zweiggleis durch die Stromabnehmer-Schleifleiste und die damit verbundenen negativen Begleiterscheinungen ausgeschlossen.

Die Oberleitungsanlage nach Anspruch 1 ist nicht nur für Weichen mit großen Radien des Zweiggleises, sondern auch für Weichen, deren Zweiggleise kleine Radien aufweisen, geeignet. Bei Zweiggleisen mit kleinen Radien kann damit auf eine aufwendige Bespannung im Weichenbereich verzichtet werden. Durch das erfindungsgemäße Anheben des Fahrdrahtes für das Zweiggleis kann auch in diesem Fall das Stammgleis mit Geschwindigkeiten von über 200 km/h befahren werden.

In vorteilhafter Weise ist der Fahrdraht für das Zweiggleis durch eine Betätigungseinrichtung, die mit der zugehörigen Weichenstell- und Lageüberwachungseinrichtung gekoppelt ist, in die erforderliche Höhenlage zum Fahrdraht für das Stammgleis bringbar.

Besonders vorteilhaft ist es, bei Zweiggleisen mit großen Radien die Höhenlage des Fahrdrahtes für das Zweiggleis in seinem dritten Stützpunkt, das ist der Stützpunkt der an wenigstens einem Mast oder wenigstens einer Quertrageinrichtung im Bereich der Weichenmitte angeordnet ist, festzulegen. Bei Zweiggleisen mit kleinen Radien wird die Höhenlage des Fahrdrahtes für das Zweiggleis in seinem ersten Stützpunkt, das ist der Stützpunkt, der im Bereich des Weichenanfangs liegt, festgelegt

Die Erfindung wird nachfolgend in Verbindung mit der Zeichnung näher erläutert. Es zeigen:
- FIG 1: eine Draufsicht auf eine erste Ausführungsform der erfindungsgemäßen Oberleitungsanlage für eine Weiche, deren Zweiggleis einen großen Radius aufweist,
- FIG 2: eine Draufsicht auf eine zweite Ausführungsform der erfindungsgemäßen Oberleitungsanlage für eine Weiche, deren Zweiggleis einen kleinen Radius aufweist.

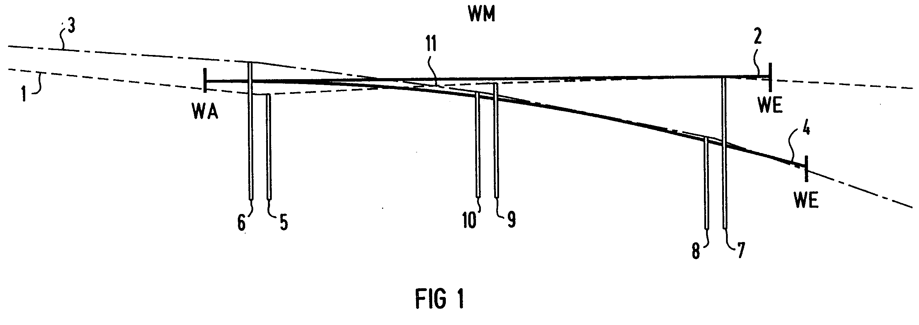

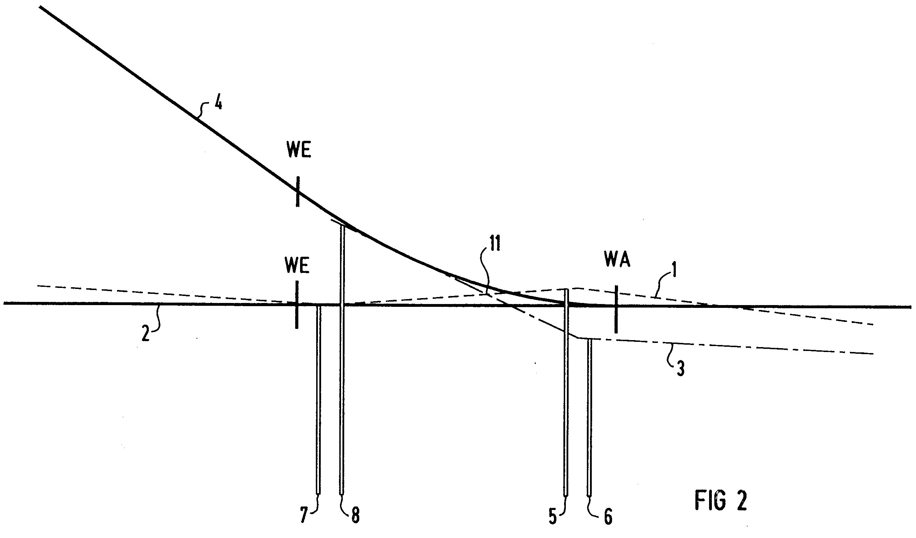

In den FIG 1 und 2 ist mit 1 ein Fahrdraht eines Stammgleises 2 und mit 3 ein Fahrdraht eines Zweiggleises 4 bezeichnet. Die Fahrdrähte 1 und 3 sind zusammen mit Tragseilen und Beiseilen sowie zugehörigen Haltevorrichtungen Bestandteile eines Kettenwerks. Das Stammgleis 2 und das Zweiggleis 4 bilden zusammen die Weiche, wobei das Stammgleis 2 der gerade Strang der Weiche und das Zweiggleis 4 der abzweigende (gebogene) Strang der Weiche ist.

Im Bereich des Weichenanfangs WA ist ein erster Stützpunkt 5 für den Fahrdraht 1 des Stammgleises 2 und ein erster Stützpunkt 6 für den Fahrdraht 3 des Zweiggleises 4 angeordnet. Im Bereich des Weichenendes WE ist ein zweiter Stützpunkt 7 für den Fahrdraht 1 des Stammgleises 2 und ein zweiter Stützpunkt 8 für den Fahrdraht 3 des Zweiggleises 4 angeordnet.

Bei dem Ausführungsbeispiel gemäß FIG 1 ist im Bereich der Weichenmitte WM ein dritter Stützpunkt 9 für den Fahrdraht 1 des Stammgleises 2 und ein dritter Stützpunkt 10 dür den Fahrdraht 3 des Zweiggleises 4 angeordnet.Der Stammgleis-Fahrdraht 1 und der Zweiggleis-Fahrdraht 3 kreuzen sich in einem Punkt 11, der zwischen den ersten Stützpunkten 5 und 6 sowie den dritten Stützpunkten 9 und 10 liegt.

Beim Befahren des Stammgleises 2 in beiden Richtungen befindet sich die Weiche in "Geradeaus"-Stellung. Erfindungsgemäß wird dann der Zweiggleis-Fahrdraht 3 in seinem dritten Stützpunkt 10 gegenüber dem Stammgleis-Fahrdraht 1 angehoben.

Das Ausführungsbeispiel in FIG 2 unterscheidet sich von der Oberleitungsanlage gemäß FIG 1 dadurch, daß die dritten Stützpunkte 9 und 10 in Weichenmitte WM entfallen. Der Anhub des Zweiggleis-Fahrdrahtes 3 erfolgt dann im ersten Stützpunkt 6.

Bei beiden Weichenarten ist damit unabhängig vom Radius des Zweiggleises 4 sichergestellt, daß das Stammgleis 2 mit Geschwindigkeiten von über 200 km/h gefahren werden kann, ohne daß Kontaktkraftspitzen oder Lichtbogenbildung auftreten.

## Patentansprüche

1. Oberleitungsanlage, deren Kettenwerk im Bereich einer Weiche wenigstens einen Fahrdraht (1) für ein Stammgleis (2) und wenigstens einen Fahrdraht (3) für ein Zweiggleis (4) umfaßt,
**dadurch gekennzeichnet,**
daß in Weichenstellung "Geradeaus" der Fahrdraht (3) für das Zweiggleis (4) gegenüber dem Fahrdraht (1) für das Stammgleis (2) angehoben ist und in Weichenstellung "Abzweigen" der Fahrdraht (3) für das Zweiggleis (4) auf die Höhe des Fahrdrahtes (1) für des Stammgleis (2) abgesenkt ist.

2. Oberleitungsanlage nach Anspruch 1,
**dadurch gekennzeichnet,**
daß der Fahrdraht (3) für das Zweiggleis (4) durch eine Betätigungseinrichtung, die mit der zugehörigen Weichenstell- und Lageüberwachungseinrichtung gekoppelt ist, in die erforderliche Höhenlage zum Fahrdraht (1) für das Stammgleis (2) bringbar ist.

3. Oberleitungsanlage nach Anspruch 1,
**dadurch gekennzeichnet,**
daß der Fahrdraht (3) für das Zweiggleis (4) in seinem dritten Stützpunkt (10), der im Bereich der Weichenmitte (WM) liegt, in seiner Höhenlage zum Fahrdraht (1) für das Stammgleis (2) festgelegt ist.

4. Oberleitungsanlage nach Anspruch 1,
**dadurch gekennzeichnet,**
daß der Fahrdraht (3) für das Zweiggleis (4) in seinem ersten Stützpunkt (6), der im Bereich des Weichenanfangs (WA) liegt, in seiner Höhenlage zum Fahrdraht (1) für das Stammgleis (2) festgelegt ist.

5. Oberleitungsanlage nach Anspruch 3 oder 4,
**dadurch gekennzeichnet,**
daß die Höhenlage des Fahrdrahtes (3) für das Zweiggleis (4) durch eine Auslegerkonstruktion erfolgt, die ein Anheben und Absenken des Fahrdrahtes bzw. des Kettenwerkes erlaubt.

6. Obeleitungsanlage nach Anspruch 3 oder 4,
**dadurch gekennzeichnet,**
daß die Höhenlage des Fahrdrahtes (3) für das Zweiggleis (4) durch die Stellung wenigstens eines Stützrohres festgelegt ist.

7. Oberleitungsanlage nach Anspruch 3 oder 4,
**dadurch gekennzeichnet,**
daß die Höhenlage des Fahrdrahtes (3) für das Zweiggleis (4) durch ein Anheben und Absenken des gesamten Auslegers mit seinem Kettenwerk erfolgt.

8. Oberleitungsanlage nach Anspruch 3 oder 4,
**dadurch gekennzeichnet,**
daß bei einem festen Ausleger das Anheben und Absenken des Kettenwerks über eine Hebe- und Senkmechanik erfolgt.

9. Oberleitungsanlage nach Anspruch 8,
**dadurch gekennzeichnet,**
daß die Hebe- und Senkmechanik eine Seilzugeinrichtung umfaßt.
